# EUROPÄISCHE PATENTSCHRIFT

(11) **EP 1 616 612 B1**
(45) Veröffentlichungstag und Bekanntmachung des Hinweises auf die Patenterteilung: **05.09.2007**
(21) Anmeldenummer: 05014501.0
(22) Anmeldetag: 05.07.2005
(51) Int. Cl.: B01D 35/16

(54) **Ölfilteranordnung und Mittelrohr**
Oil filter assembly and center tube
Agencement d'un filtre à huile et tube central

(30) Priorität: 16.07.2004 DE 102004036029
(43) Veröffentlichungstag der Anmeldung: 18.01.2006
(73) Patentinhaber: Joma-Polytec Kunststofftechnik GmbH, 72411 Bodelshausen (DE)
(72) Erfinder: Maute, Alexander, 72379 Hechingen-Stetten (DE); Pfitzer, Friedhelm, 72414 Rangendingen (DE); Heinz, Stefan, 72411 Bodelshausen (DE); Jungmann, Peter, 72414 Rangendingen (DE); Knöll, Matthias, 72574 Bad Urach (DE); Maier, Ulrich, 72144 Dusslingen (DE)
(74) Vertreter: Dreiss, Fuhlendorf, Steimle & Becker

(56) Entgegenhaltungen:
- US-B1- 6 569 326
- US-B1- 6 685 829
- PATENT ABSTRACTS OF JAPAN Bd. 2000, Nr. 13, 5. Februar 2001 (2001-02-05) -& JP 2000 288317 A (TOYO ROKI MFG CO LTD), 17. Oktober 2000 (2000-10-17)

## Beschreibung

Die Erfindung betrifft eine Ölfilteranordnung mit einem Gehäusedeckel verschließbaren topfförmigen Aufnahmeraum für ein radial mit Öl durchströmbares Filterelement, und mit einem wenigstens abschnittsweise radial durchströmbaren Mittelrohr zur Halterung des Filterelements im Aufnahmeraum. Die Erfindung betrifft außerdem ein Mittelrohr für eine derartige Filteranordnung.

Aus der EP 0 848 978 B1 ist eine Ölfilteranordnung mit einem Mittelrohr in Form einer Rohrzarge und einem auf die Rohrzarge aufgesetztem Ringfilterelement bekannt geworden. Das Mittelrohr mit Filterelement sitzt dabei in einem topfförmigen Aufnahmeraum, der von einem Gehäusedeckel verschließbar ist. Der Aufnahmeraum sieht einen Einlass für Rohöl und einen Auslass für Reinöl vor. Ferner ist ein Abfluss vorgesehen, der durch das freie Ende einer Verlängerung des Mittelrohrs verschlossen ist. Beim Herausziehen des Mittelrohrs wird dieser Drainageabfluss geöffnet, so dass im Aufnahmeraum vorhandenes Schmieröl abfließen kann.

Bei diesem Stand der Technik ist nicht ausgeschlossen, dass beim Herausziehen des Mittelrohrs ungereinigtes Rohöl in den Auslassstutzen für Reinöl gelangen kann. Nach längerem Einsatz des Filterelements sammeln sich auf der Rohölseite des Filterelements zu filternde Schwebstoffe. Beim Herausziehen des Mittelrohrs können diese Stoffe ungehindert in den Ablassstutzen, beziehungsweise auf die Reinölseite gelangen.

Aus der JP 2000 288317 A bzw. aus dem zugehörigen Patent Abstracts of Japan (Bd. 2000, Nr. 13, 5. Februar 2001) ist eine Ölfilteranordnung bekannt geworden, bei der eine Mittelrohrverlängerung ein Reinölfenster, das in einer Betriebslage mit einer Reinölöffnung korrespondiert, aufweist. Ferner ist ein Drainagefenster vorgesehen, das in einer Ablasslage des Mittelrohrs bzw. der Mittelrohrverlängerung eine Drainageöffnung freigibt.

Der vorliegenden Erfindung liegt die Aufgabe zugrunde, eine Filteranordnung bereitzustellen, bei der sichergestellt wird, dass kein Rohöl beim Herausnehmen des Filterelements in den Reinölbereich gelangen kann. Die Filteranordnung soll dennoch einen einfachen Aufbau aufweisen und einfach in der Handhabbarkeit sein. Zudem soll beim Herausnehmen des Filterelements eine wenigstens weitgehende Entleerung des Aufnahmeraums erfolgen.

Diese Aufgabe wird durch eine Filteranordnung mit den Merkmalen des Anspruchs 1 gelöst.

Hierdurch wird gewährleistet, dass in der Betriebslage des Mittelrohrs, also im Betrieb der Filteranordnung, das Filterelement radial durchströmende Reinöl ausschließlich in die Reinölöffnung gelangt, und nicht in die Drainageöffnung. In der Ablasslage wird hingegen gewährleistet, dass die Reinölöffnung geschlossen ist, so dass kein Rohöl in die Reinölöffnung einfließen kann, wenn das Öl aus dem Aufnahmeraum in die Drainageöffnung abfließt; der Aufnahmeraum kann in der Ablasslage leer laufen, bevor das Filterelement gänzlich aus dem Aufnahmeraum entnommen wird. Das aus dem Aufnahmeraum abfließende Öl kann dabei bereits gefiltertes Reinöl oder ungefiltertes Rohöl sein.

Durch das Korrespondieren eines geschlossenen Abschnitts der Mittelrohrverlängerung mit der Drainageöffnung wird die Drainageöffnung verschlossen. Entsprechend wird in der Ablasslage die Reinölöffnung durch das Korrespondieren mit einem geschlossnen Abschnitt der Mittelrohrverlängerung verschlossen.

Beim Überführen des Mittelrohrs von der Betriebslage in die Ablasslage kann vorgesehen sein, dass das Verschließen der Reinölöffnung zeitgleich mit dem Öffnen der Drainageöffnung erfolgt. Allerdings kann erfindungsgemäß ebenfalls vorgesehen sein, dass zunächst die Reinölöffnung verschlossen wird, und die Drainageöffnung erst bei vollständig oder teilweise verschlossener Reinölöffnung geöffnet wird.

Die Mittelrohrverlängerung weist vorteilhafterweise lediglich das Reinölfenster und das Drainagefenster auf und ist sonst umfangmäßig, und gegebenenfalls an der freien Stirnseite, geschlossen ausgebildet.

Ferner ist vorgesehen, dass die Mittelrohrverlängerung zusätzlich ein Restablauffenster derart aufweist, dass in der Betriebslage des Mittelrohr ein geschlossener Abschnitt der Wandung des Ablaufraums mit dem Restablauffenster korrespondiert und dass in der Ablasslage des Mittelrohrs das Restablauffenster mit einem Zugang zur Bodenseite des Aufnahmeraums so korrespondiert, dass Restöl aus dem Bodenbereich des Aufnahmeraums über das Restablauffenster durch die Mittelrohrverlängerung zur Drainageöffnung abfließen kann.

Das Vorsehen eines Restablauffensters hat den Vorteil, dass gewährleistet wird, dass in der Ablasslage des Mittelrohrs eine wenigstens weitgehende Entleerung des Aufnahmeraums erfolgen kann. Insbesondere bei Vorsehen eines Staurohres im radial innen liegenden Bereich des radial durchströmbaren Mittelrohrs, wie beispielsweise aus der EP 0 848 978 B1 bekannt, kann ein vollständiges Ablaufen des Aufnahmeraums durch Überführen des Mittelrohrs aus der Betriebslage in die Ablasslage erfolgen, ohne dass Rohöl in die Reinölöffnung gelangen kann. Das abzuführende Restöl gelangt durch die die Reinölöffnung verschließende Mittelrohrverlängerung zur Drainageöffnung.

Dabei kann vorgesehen sein, dass der Zugang von der Bodenplatte zum Restablauffenster durch unmittelbares Korrespondieren des Restablauffensters mit der Bodenseite realisiert ist. In diesem Fall liegt die Bodenseite dann in der Ablasslage im Bereich des Restablauffensters; Öl kann folglich direkt über die Bodenseite in das Restablauffenster abfließen. Ebenso ist denkbar, dass der Zugang von der Bodenseite zum Restablauffenster durch einen sich von der Bodenseite zum Restablauffenster erstreckenden, entlang der Mittelrohrverlängerung verlaufenden Spalt realisiert sein kann. Dieser Spalt ist dann radial außen an der Mittelrohrverlängerung vorgesehen; Restöl fließt dann von der Bodenseite entlang der radial außen liegenden Seite der Mittelrohrverlängerung zum Restablauffenster, wo es auf die Innenseite der Mittelrohrverlängerung gelangt und zur Drainageöffnung abfließen kann. Ferner ist denkbar, dass der Zugang von der Bodenseite zum Restablauffenster durch einen Kanal im Gehäuse realisiert ist, der sich von der Bodenseite des Aufnahmeraums in den Bereich des Restablauffensters erstreckt; in der Ablasslage korrespondiert dann das der Bodenseite abgewandte Ende des Kanals mit dem Restablauffenster.

Gemäß einer weiteren Ausführungsform der Erfindung kann vorgesehen sein, dass das freie Ende der Mittelrohrverlängerung offen ist und dass das Drainagefenster des Mittelrohrs von der freien Stirnseite der Mittelrohrverlängerung gebildet wird. Hierdurch kann eine Verkürzung der Mittelrohrverlängerung erreicht werden, da kein radialer Raum für das Drainagefenster vorzusehen ist. In der Ablasslage fließt das abzulassende Öl über das freie Ende des Mittelrohrs in die Drainageöffnung.

Eine bevorzugte Ausführungsform der Erfindung sieht vor, dass das Mittelrohr bei geöffnetem Gehäusedeckel durch axiales Verschieben von der Betriebslage in die Ablasslage überführbar ist. Allerdings ist erfindungsgemäß ebenfalls möglich, dass das Überführen von der Betriebslage in die Ablasslage durch Verdrehen des Mittelrohrs um die Längsachse möglich ist. Hierdurch wird insbesondere Bauraum in axialer Richtung eingespart.

Gemäß einer weiteren Ausgestaltung der Erfindung ist vorgesehen, dass an der Mittelrohrverlängerung und am Ablaufraum miteinander korrespondierende Eingriffsmittel zur Vermeidung einer Verdrehung des Mittelrohrs vorgesehen sind. Dies ist insbesondere dann erforderlich, wenn die Überführung des Mittelrohrs von der Betriebslage in die Ablasslage durch axiales Verschieben des Mittelrohrs erfolgt. Durch Vorsehen der Eingriffsmittel wird gewährleistet, dass das Reinölfenster, das Drainagefenster und/oder das Restablauffenster in der Ablasslage mit der jeweiligen Öffnung des Ablassraums korrespondiert. Die Eingriffsmittel können beispielsweise als Nut/Federeingriffsmittel ausgebildet sein.

Allerdings kann gemäß einer weiteren Ausführungsform der Erfindung vorgesehen sein, dass am radialen Umfang der Mittelrohrverlängerung auf Höhe des Drainagefensters, des Reinölfensters und/oder des Restablauffensters weitere, entsprechende Fenster vorgesehen sind. Auf Höhe des jeweiligen Umfangs sind dann umlaufend die jeweiligen Fenster vorgesehen. Dies hat den Vorteil, dass die Drehstellung des Mittelrohrs beim Überführen des Mittelrohrs aus der Betriebslage in die Ablasslage beliebig sein kann; es wird immer gewährleistet, dass ein entsprechendes Fenster mit der entsprechenden Öffnung korrespondiert.

Gemäß einer weiteren, ebenfalls sehr vorteilhaften Ausgestaltung der Erfindung ist vorgesehen, dass ein sich am Gehäuse abstützendes Federmittel vorgesehen ist, dass beim Öffnen des Deckels das Mittelrohr aus der Betriebslage in die Ablasslage überführt. Durch Vorsehen eines entsprechenden Federmittels wird folglich gewährleistet, dass das Mittelrohr automatisch beim Öffnen des Gehäusedeckels in die Ablasslage gelangt, wodurch das im Aufnahmeraum vorhandene Reinöl und Rohöl über die Drainageöffnung abfließen kann. Nach kurzem warten kann das Filterelement folglich aus dem Aufnahmeraum entnommen werden, ohne dass dabei noch größere Mengen von Restöl im Aufnahmeraum vorhanden sind.

Dabei ist vorteilhaft, wenn am Mittelrohr Rückhaltemittel vorgesehen sind, die eine Überführung des Mittelrohrs über die Ablasslage hinaus erschweren. Dabei kann folglich gewährleistet werden, dass die Ablasslage sicher erreicht wird, insbesondere dann, wenn Federmittel vorgesehen sind zum Überführen des Mittelrohrs aus der Betriebslage in die Ablasslage. Bei Vorsehen eines derartigen Federelements sind die Rückhaltemittel vorteilhafterweise so ausgelegt, dass das Mittelrohr in der Ablasslage verharrt. Mit einem erhöhten Kraftaufwand kann vorzugsweise dann das Mittelrohr aus dem Aufnahmeraum in axialer Richtung herausgezogen werden.

Als Rückhaltemittel können dabei an dem freien Ende des Mittelrohrs vorgesehene Hakenabschnitte zum Einhaken an einer Kante, beispielsweise der Drainageöffnung, vorgesehen sein. Derartige Hakenabschnitte können auf einfache Art und Weise an dem freien Ende des Mittelrohrs realisiert werden.

Ferner ist erfindungsgemäß vorteilhaft, wenn am Mittelrohr Dichtringe vorgesehen sind, die einzelne Abschnitte des Mittelrohrs voneinander trennen. Die einzelnen Abschnitte können dabei insbesondere den das Reinölfenster aufweisenden Abschnitt, den das Restablauffenster aufweisenden Abschnitt, den in der Betriebslage die Drainageöffnungen verschließenden Abschnitt und den in der Ablasslage die Reinölöffnung verschließenden Abschnitt sein. Zwischen jeweils zwei aneinander angrenzenden, benachbarten Abschnitten ist vorteilhafterweise ein Dichtring zur Trennung dieser beiden Abschnitte vorgesehen.

Gemäß einer weiteren Ausführungsform der Erfindung sieht das Mittelrohr im Übergangsbereich zur Mittelrohrverlängerung einen sich nach radial außen erstreckenden Anlageabschnitt für die dem Gehäusedeckel abgewandte Stirnseite des Filterelements vor. Hierdurch wird eine sichere Positionierung des Filterelements am Mittelrohr erreicht.

Ferner ist vorteilhaft, wenn das Mittelrohr im Übergangsbereich und/oder im Bereich des Anlageabschnitts ein nach radial innen zurückversetztes, sich in Richtung des Gehäusedeckels erstreckendes, umfangmäßig geschlossenes Staurohr umfasst. Durch ein derartiges Staurohr kann gewährleistet werden, dass bei druckfreier Filteranordnung die Filteranordnung nicht leer läuft, sondern dass eine gewisse Restölmenge, nämlich bis zur Oberkante des Staurohrs, im Aufnahmeraum verbleibt.

Dabei ist vorteilhaft, wenn der Durchmesser des Staurohrs wenigstens weitgehend dem Durchmesser der Mittelrohrverlängerung entspricht. Ein derartiges Mittelrohr mit Mittelrohrverlängerung lässt sich auf einfache Art und Weise herstellen und erfüllt sämtliche, mit der Erfindung zusammenhängende Anforderungen.

Die eingangs genannte Aufgabe wird außerdem durch ein Mittelrohr mit einer Mittelrohrverlängerung für eine erfindungsgemäße Ölfilteranordnung gelöst.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Figur 1: einen Längsschnitt durch eine erste Ausführungsform der Erfindung (Betriebslage);
- Figur 2: einen Längsschnitt durch eine zweite Ausführungsform der Erfindung (Betriebslage);
- Figur 3: einen Längsschnitt durch eine dritte Ausführungsform der Erfindung (Betriebslage);
- Figur 4: einen Längsschnitt durch eine vierte Ausführungsform der Erfindung (Ablasslage);
- Figur 5: eine Vergrößerung des Ausschnitts V der Figur 4; und
- Figur 6: einen Schnitt durch die Mittelrohrverlängerung entlang der beiden Linien VI in Figur 4.

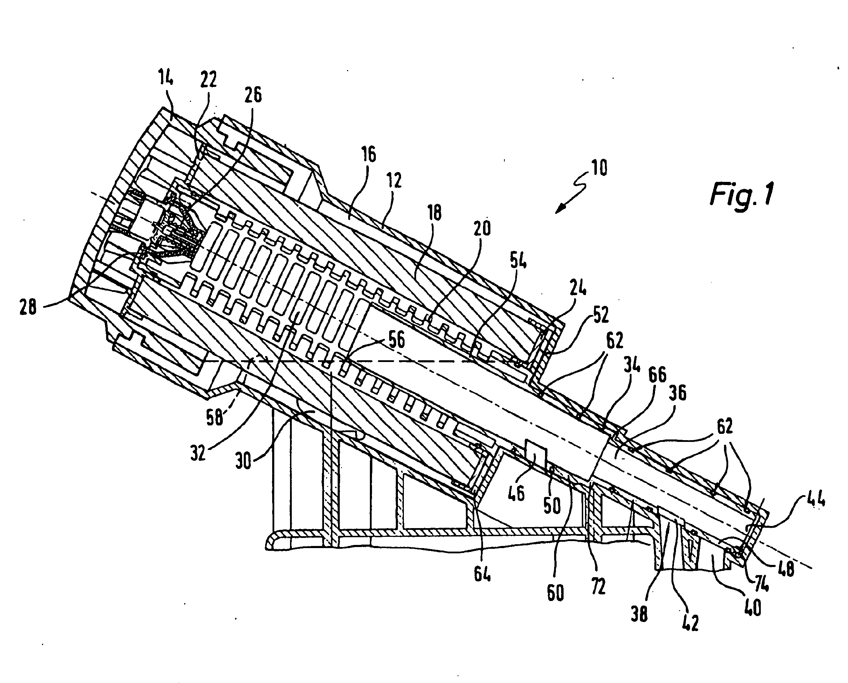

In der Figur 1 ist eine erfindungsgemäße Ölfilteranordnung 10 gezeigt, die ein Gehäuse 12 und einen mit einem Gehäusedeckel 14 verschließbaren Aufnahmeraum 16 umfasst. Im Aufnahmeraum 16 ist ein radial mit Öl durchströmbares Filterelement 18 auf einem Mittelrohr 20 angeordnet. Das Mittelrohr 20 ist im Bereich des Filterelements 18 radial durchströmbar. An der dem Deckel zugewandten Seite liegt das Mittelrohr 20 radial dicht an der oberen Endseite 22 des Filterelements 18 an. Ebenso liegt das Mittelrohr 20 an der dem Gehäusedeckel 14 abgewandten Endseite 24 des Filterelements radial dicht an dem Filterelement 18 an.

Auf der Innenseite des Gehäusedeckels 14 ist am Gehäusedeckel 14 ein Überströmventil 26 vorgesehen, das bei zugesetztem Filterelement 18 ein Umströmen des Filterelements 18 ermöglicht. Das Überströmventil 26 sieht einen radial äußeren Rand 28 vor, der dichtend an einer Öffnung an der Endseite 22 des Filterelements 18 anliegt. Bei abgenommenen Gehäusedeckel 14 wird aufgrund der Befestigung des Filterelements 26 am Gehäusedeckel 14 die Öffnung an der Endseite 22 freigegeben.

Das Gehäuse 12 weist eine Zulauföffnung 30 auf, mit der Rohöl in den Aufnahmeraum 16 gelangt. Das Rohöl durchströmt im Betrieb der Ölfilteranordnung das Filterelement 18 von radial außen nach radial innen; im Innenraum 32 des Filterelements 18 liegt demnach gefiltertes Reinöl vor.

Das Mittelrohr 20 weist auf seiner dem Gehäusedeckel abgewandten Seite eine Mittelrohrverlängerung 34 auf, die in einen sich an den Aufnahmeraum 16 anschließenden Ablaufraum 36 eingreift. Der Ablaufraum 36 weist gegenüber dem Aufnahmeraum 16 eine geringere Querschnittsfläche auf, wobei der Innendurchmesser des Ablaufraums 16 geringfügig größer ist als der Außendurchmesser der Mittelrohrverlängerung 34.

Der Ablaufraum 36 weist eine radial angeordnete Reinölöffnung 38 zum Abfließen des gefilterten Reinöls auf. Außerdem weist der Ablaufraum 36 eine ebenfalls radial angeordnete Drainageöffnung 40 auf, die zum Ablaufen von in dem Aufnahmeraum 16 vorhandenem Öl beim Wechseln des Filterelements dient.

An der radial umfangsseitig geschlossenen Mittelrohrverlängerung 34 ist ein radial angeordnetes Reinölfenster 42, ein an der freien Stirnseite der Mittelrohrverlängerung 34 angeordnetes Drainagefenster 44 und ein radial angeordnetes Restablauffenster 46 vorgesehen.

In der in der Figur 1 dargestellten Betriebslage des Mittelrohrs, bei geschlossenem Gehäusedeckel 14, korrespondiert die Reinölöffnung 38 mit dem Reinölfenster 42 derart, dass Reinöl aus dem Innenraum 32 über die Mittelrohrverlängerung 34 durch das Reinölfenster 42 in die Reinölöffnung 38 fließen kann. Ferner korrespondiert in der Betriebslage ein geschlossener Abschnitt 48 der Mittelrohrverlängerung 34 mit der Drainageöffnung 40, so dass die Drainageöffnung 40 verschlossen ist. Außerdem korrespondiert das Restablauffenster 46 mit einem geschlossenen Abschnitt 50 der Wandung des Ablaufraums 34 derart, dass das Restablauffenster 46 geschlossen ist.

Zum Auswechseln des Filterelements 18 kann das Mittelrohr 20 bei geöffnetem Gehäusedeckel 14 durch geringes, axiales Herausziehen in eine Ablasslage überführt werden. In der Ablasslage korrespondiert die Reinölöffnung 38 mit einem geschlossenen Abschnitt 48 der Rohrverlängerung 34, wodurch die Reinölöffnung 38 verschlossen ist. Das Drainagefenster 44 korrespondiert in der Ablasslage mit der Ablassöffnung 40, wodurch im Innenraum 32 vorhandenes Öl über die Innenseite des Mittelrohrs und der Rohrverlängerung in die Drainageöffnung 40 abfließen kann. Ferner korrespondiert das Restablassfenster 46 mit der Bodenseite 52 des Aufnahmeraums 16 derart, dass Rohöl aus dem Aufnahmeraum 16 und aus dem Bereich des Bodens 52 durch das Restablauffenster 46 auf die Innenseite der Mittelrohrverlängerung 34 fließen kann, und zur Drainageöffnung 40 geführt wird. Bei dem durch das Restablauffenster fließenden Öl handelt es sich in erster Linie um nicht gefiltertes Rohöl.

Durch die beschriebene Anordnung wird gewährleistet, dass beim Auslenken des Mittelrohrs 20 kein Rohöl in die Reinölöffnung 38 fließen kann; sämtliches im Aufnahmeraum 16 vorhandenes Öl, sei es Reinöl oder Rohöl, fließt über die Mittelrohrverlängerung in die Drainageöffnung 40.

Wie aus der Figur 1 deutlich wird, sieht das Mittelrohr ein nach radial innen zurückversetztes, sich in Richtung des Gehäusedeckels erstreckendes, umfangmäßig geschlossenes Staurohr 54 vor. Das Staurohr verhindert, dass bei Druckabfall ein vollständiges Leerlaufen des Aufnahmeraums 16 erfolgt, weshalb vor dem Öffnen des Gehäusedeckels der Aufnahmeraum 16 bis zur unteren Oberkante 56 des Staurohrs stets mit Öl gefüllt ist. Dieser Ölspiegel ist durch die gestrichelte Linie 58 angedeutet. Beim Überführen des Mittelrohrs 20 in die Ablasslage kann das bis zur Kante 56 vorhandene Öl über das Restablauffenster 46 abfließen, ohne dass das abfließende Öl in die Reinölöffnung 38 gelangt.

Um zu gewährleisten, dass in der Betriebslage das Reinölfenster 42 mit der Reinölöffnung 38 korrespondiert und dass in der Ablasslage das Restablassfenster 46 mit der Bodenseite 52 des Aufnahmeraums 16 korrespondiert, sind an der Außenseite der Mittelrohrverlängerung 34 und an der Innenseite des Ablassraums 36 Eingriffsmittel 60 in Form eines sich in axialer Richtung erstreckenden Steges an der Mittelrohrverlängerung 34 und einer zugehörigen Nut an der Wandung des Ablaufraums 36 vorgesehen. Ein Verdrehen des Mittelrohrs um die Längsachse wird dadurch ausgeschlossen.

Zwischen den einzelnen Abschnitten der Mittelrohrverlängerung sind umlaufende Ringdichtungen 62 vorgesehen.

Im Übergangsbereich des Mittelrohrs 20 zur Mittelrohrverlängerung 34 ist ein sich nach radial außen erstreckender Anlageabschnitt 64 für die dem Gehäusedeckel 14 abgewandte Endseite 24 des Filterelements 18 vorgesehen. Vom radial inneren Bereich dieses Anlageabschnitts 64 erstreckt sich das Staurohr 54 in Richtung Gehäusedeckel 14. Der Durchmesser der sich in die andere Richtung , erstreckende Mittelrohrverlängerung entspricht im Wesentlichen dem Durchmesser des Staurohrs 54. Bei der Ausführungsform gemäß Figur 1 weist die Mittelrohrverlängerung eine die Verlängerung nach radial innen zurückversetzende Stufe 66 auf. Der Ablaufraum 36 sieht eine entsprechende Stufe 72 vor.

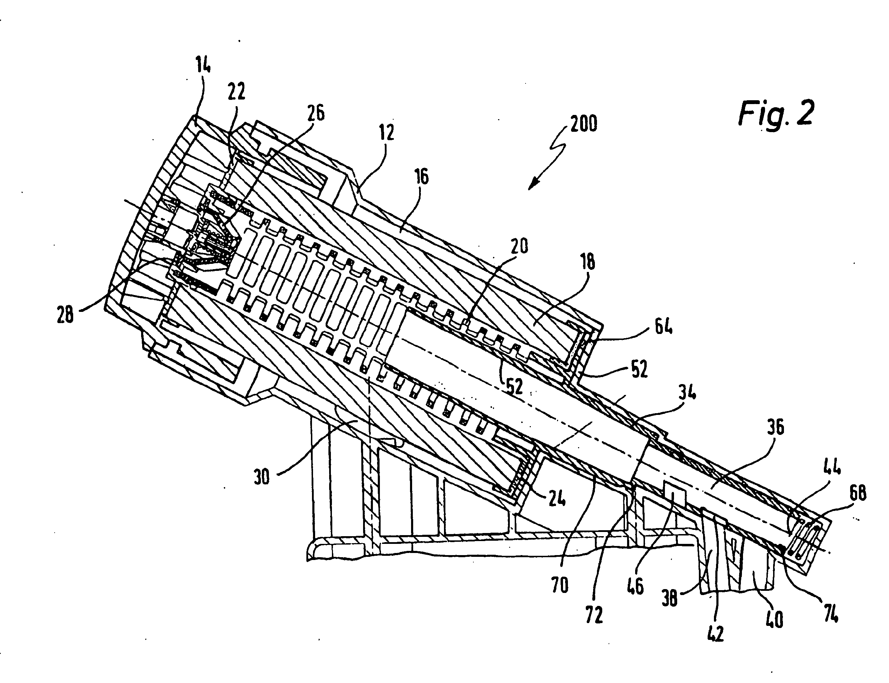

Die in der Figur 2 dargestellte Ölfilteranordnung 200 entspricht im Wesentlichen der Ölfilteranordnung 10 gemäß Figur 1, wobei entsprechende Bauteile mit entsprechenden Bezugszeichen versehen sind. Wesentlicher Unterschied der Ölfilteranordnung 200 ist, dass zwischen dem freien Ende der Mittelrohrverlängerung 34 und der dem freien Ende der Mittelrohrverlängerung zugewandten Bodenfläche 52 des Ablaufraums 36 ein Federelement 68 in Form einer Schraubenfeder vorgesehen ist. Das Federelement 68 beaufschlagt über das Mittelrohr 20 das Filterelement 18 gegen den Gehäusedeckel 14. Hierdurch wird zum einen eine effektive Dichtwirkung zwischen dem radial äußeren Rand 28 des Überströmventils 26 und der am radial äußeren Rand anliegenden Öffnung der Endscheibe 22 des Filterelements 18 gewährleistet. Ferner wird der Effekt erzielt, dass beim Aufschrauben des Gehäusedeckels 14 das Mittelrohr 20 samt Filterelement 18 aus der Betriebslage in die Ablasslage automatisch axial verschoben wird. Beim Abschrauben des Gehäusedeckels wird also automatisch eine Entleerung des im Aufnahmeraum 16 vorhandenen Öls eingeleitet.

Die Ölfilteranordnung 200 unterscheidet sich von der Ölfilteranordnung gemäß Figur 1 auch durch eine andere Lage des Restablauffensters 46 an der Mittelrohrverlängerung 34. In der Ablasslage ragt bei der Ölfilteranordnung 200 die Bodenseite 52 nicht unmittelbar in das Restablassfenster 46, wie es bei der Ölfilteranordnung 10 gemäß Figur 1 der Fall ist. Vielmehr ist ein Zugang von der Bodenseite 52 zum Restablassfenster 46 durch einen sich von der Bodenseite zum Restablauffenster 46 erstreckenden, entlang der Außenseite der Mittelrohrverlängerung 34 verlaufenden Spalt 70 realisiert. In der Ablasslage ragt die sich am Ende des Kanals 70 befindende Stufe 72 des Ablaufraums 36 in das Restablauffenster 46.

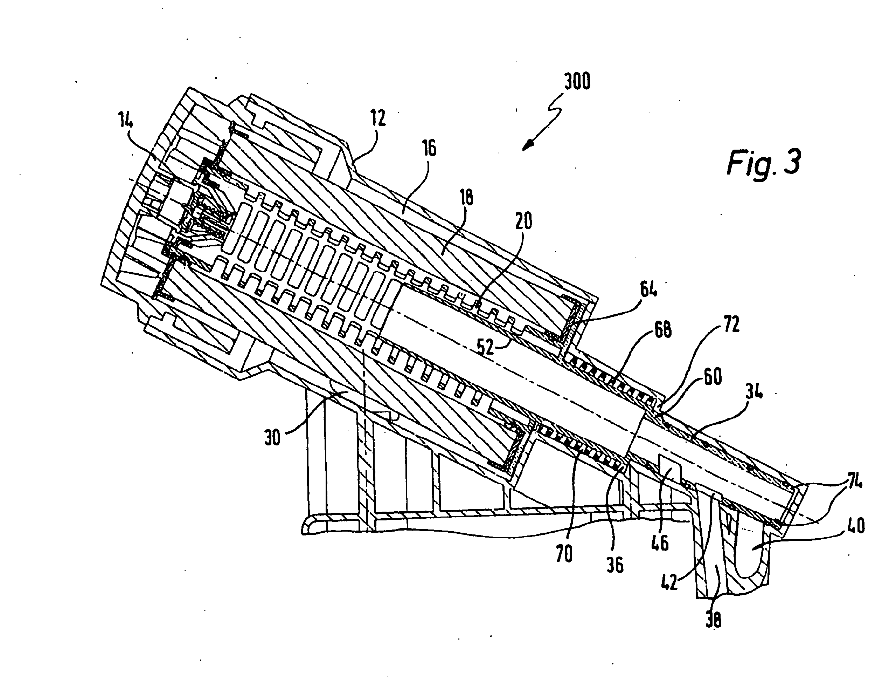

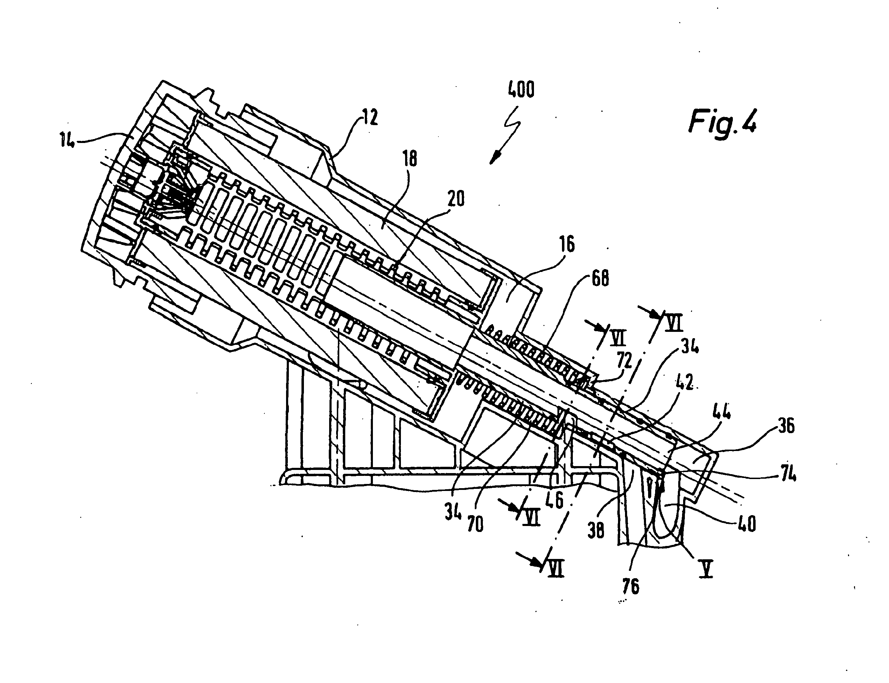

Auch die in den Figuren 3 und 4 dargestellten Ölfilteranordnungen 300 und 400 entsprechen im Wesentlichen der Ölfilteranordnung 10 gemäß Figur 1; entsprechende Bauteile sind mit entsprechenden Bezugszeichen versehen.

Bei der Ölfilteranordnung 300 gemäß Figur 3 ist ein Federelement 68 zum Auslenken des Mittelrohrs von der Betriebslage in die Ablasslage vorgesehen, wobei sich das Federelement einerseits an der Stufe 72 des Ablaufraums 36 und andererseits auf der dem Gehäusedeckel 14 abgewandten Seite des Anlageabschnitts 64 abstützt.

Bei der Ölfilteranordnung 400 gemäß Figur 4 ist das Mittelrohr 20 in der Ablasslage gezeigt. Deutlich wird, dass in der Ablasslage das Reinölfenster 42 und die Reinölöffnung 38 verschlossen sind und das zum Abfluss von Öl aus dem Aufnahmeraum 16 einerseits das Restablauffenster 46 und andererseits das Drainagefenster 44 zur Drainageöffnung 40 hin geöffnet sind.

Bei der Ölfilteranordnung 400 ist außerdem die Mittelrohrverlängerung 34 so ausgebildet, dass sie über ihre gesamte Länge einen konstanten Durchmesser aufweist.

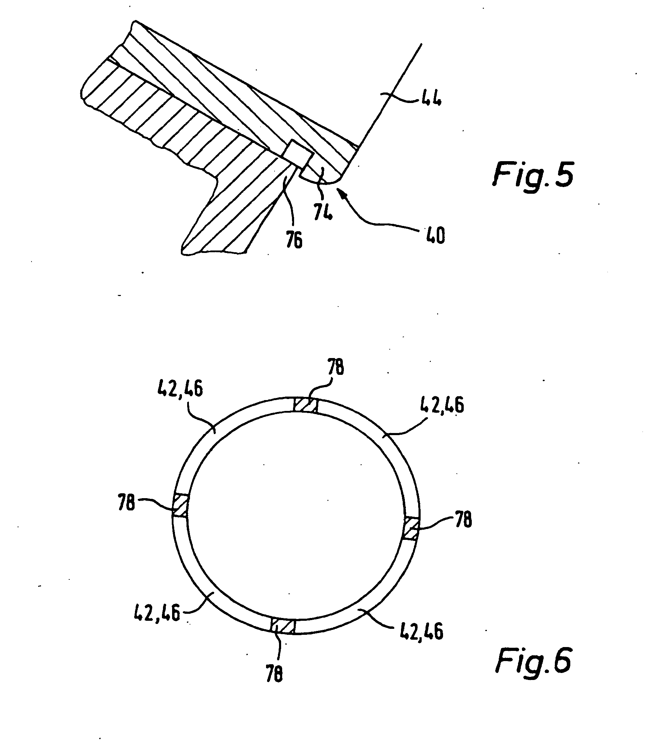

Um ein Verharren des Mittelrohrs 20 in der Ablasslage zu erreichen, sind bei allen gezeigten Ausführungsformen am Mittelrohr 20, beziehungsweise an der Mittelrohrverlängerung 34, Rückhaltemittel 74 vorgesehen. Die Rückhaltemittel sind als Hakenabschnitte ausgebildet, die an dem freien Ende der Mittelrohrverlängerung angeordnet sind. Figur 5 zeigt eine vergrößerte Darstellung eines derartigen Hakenabschnitts, wie er in der Ablasslage gemäß Figur 4 mit einer Kante 76 der Drainageöffnung 40 zusammenwirkt.

Gemäß der Figur 6 kann vorgesehen sein, dass am radialen Umfang der Mittelrohrverlängerung 34 auf Höhe des Reinölfensters 42 und/oder auf Höhe des Restablauffensters 46 weitere Fenster vorgesehen sind, so dass in jeder Drehlage des Mittelrohrs 20, beziehungsweise der Rohrverlängerung 34, gewährleistet wird, dass ein entsprechendes Fenster an der zugehörigen Öffnung vorgesehen ist. Bei einer derartigen Ausführungsform ist eine Verdrehsicherung dann nicht erforderlich. Zwischen den einzelnen Fenstern verbleiben Materialstege 78.

## Patentansprüche

1. Ölfilteranordnung (10, 200, 300, 400) mit einem mit einem Gehäusedeckel (14) verschließbaren topfförmigen Aufnahmeraum (16) für ein radial mit Öl durchströmbares Filterelement (18), und mit einem wenigstens abschnittsweise radial durchströmbaren Mittelrohr (20) zur Halterung des Filterelements (18) im Aufnahmeraum (16), wobei auf der dem Gehäusedeckel (14) gegenüberliegen Bodenseite (52) des Aufnahmeraums (14) ein Ablaufraum (36) angeordnet ist, der eine radial angeordnete Reinölöffnung (38) und eine radial angeordnete Drainageöffnung (40) aufweist, und wobei eine ein Reinölfenster (42), ein Drainagefenster (44) und ein Restablauffenster (46) umfassende Mittelrohrverlängerung (34) in den Ablaufraum (36) derart eingreift,
- dass in einer Betriebslage des Mittelrohrs (20) die Reinölöffnung (38) mit dem Reinölfenster (42), die Drainageöffnung (40) mit dem einem geschlossenen Abschnitt (48) der Mittelrohrverlängerung (34) und ein geschlossener Abschnitt (50) der Wandung des Ablaufraums (36) mit dem Restablauffenster (46) korrespondiert und
- dass in einer Ablasslage des Mittelrohrs die Reinölöffnung (38) mit einem geschlossenen Abschnitt der Mittelrohrverlängerung (34), die Drainageöffnung (40) mit dem Drainagefenster (44) und das Restablauffenster (46) mit einem Zugang zur Bodenseite (52) des Aufnahmeraums (16) so korrespondiert, dass Restöl aus dem Aufnahmeraum (16) über das Restablauffenster (46) durch die Mittelrohrverlängerung (34) zur Drainageöffnung (40) abfließen kann.

2. Ölfilteranordnung (10, 200, 300, 400) nach Anspruch 1, **dadurch gekennzeichnet, dass** der Zugang von der Bodenseite (52) zum Restablauffenster (46) durch unmittelbares korrespondieren des Restablauffensters (46) mit der Bodenseite (52), durch einen sich von der Bodenseite (52) zum Restablauffenster (46) erstreckenden, entlang der Mittelrohrverlängerung (34) verlaufenden Spalt (70) und/oder durch einen von der Bodenseite (52) zum Restablauffenster (46) verlaufenden Kanal realisiert ist.

3. Ölfilteranordnung (10, 200, 300, 400) nach Anspruch 1 oder 2, **dadurch gekennzeichnet, dass** die Mittelrohrverlängerung (34) einstückig mit dem Mittelrohr(20) ausgebildet ist.

4. Ölfilteranordnung (10, 200, 300, 400) nach einem der vorhergehenden Ansprüche, **dadurch gekennzeichnet, dass** die freie Stirnseite der Mittelrohrverlängerung (34) offen ist und dass das Drainagefenster (44) der Mittelrohrverlängerung (34) von der offenen Stirnseite der Mittelrohrverlängerung gebildet wird.

5. Ölfilteranordnung (10, 200, 300, 400) nach einem der vorhergehenden Ansprüche, **dadurch gekennzeichnet, dass** das Mittelrohr bei geöffnetem Gehäusedeckel (14) durch axiales Verschieben von der Betriebslage in die Ablasslage überführbar ist.

6. Ölfilteranordnung (10, 200, 300, 400) nach einem der vorhergehenden Ansprüche, **dadurch gekennzeichnet, dass** an der Mittelrohrverlängerung (34) und am Ablaufraum (36) miteinander korrespondierende Eingriffsmittel (60) zur Vermeidung einer Verdrehung des Mittelrohrs vorgesehen sind.

7. Ölfilteranordnung (10, 200, 300, 400) nach einem der vorhergehenden Ansprüche, **dadurch gekennzeichnet, dass** am radialen Umfang der Mittelrohrverlängerung (34) auf Höhe des Drainagefensters (94), des Reinölfensters (42) und/oder des Restablauffensters (46) weitere entsprechende Fenster vorgesehen sind.

8. Ölfilteranordnung (200, 300, 400) nach einem der vorhergehenden Ansprüche, **dadurch gekennzeichnet, dass** ein sich am Gehäuse (12) abstützendes Federmittel (68) vorgesehen ist, das beim Öffnen des Gehäusedeckels (14) das Mittelrohr aus der Betriebslage in die Ablasslage überführt.

9. Ölfilteranordnung (10, 200, 300, 400) nach einem der vorhergehenden Ansprüche, **dadurch gekennzeichnet, dass** am Mittelrohr (20, 34) Rückhaltemittel (74) vorgesehen sind, die eine Überführung des Mittelrohrs über die Ablasslage hinaus erschweren.

10. Ölfilteranordnung (10, 200, 300, 400) Anspruch 9, **dadurch gekennzeichnet, dass** die Rückhaltemittel (74) als an dem freien Ende der Mittelrohrverlängerung (34) vorgesehene Hakenabschnitte zum Einhaken an einer Kante (76) einer Öffnung (38, 40) an der Mittelrohrverlängerung (34) ausgebildet sind.

11. Ölfilteranordnung (10, 200, 300, 400) nach einem der vorhergehenden Ansprüche, **dadurch gekennzeichnet, dass** am Mittelrohr Dichtringe (62) vorgesehen sind, die einzelne Abschnitt des Mittelrohrs, insbesondere den das Reinölfenster aufweisenden Abschnitt, den das Restablauffenster aufweisenden Abschnitt, den in der Betrieblage die Drainageöffnung verschießenden Abschnitt, und den in der Ablasslage die Reinölöffnung verschließenden Abschnitt voneinander trennen.

12. Ölfilteranordnung (10, 200, 300, 400) nach einem der vorhergehenden Ansprüche, **dadurch gekennzeichnet, dass** das Mittelrohr im Übergangsbereich zur Mittelrohrverlängerung einen sich nach radial außen erstreckenden Anlageabschnitt (64) für die dem Gehäusedeckel (14) abgewandte Endseite (24) des Filterelements (18) aufweist.

13. Ölfilteranordnung (10, 200, 300, 400) nach Anspruch 12, **dadurch gekennzeichnet, dass** das Mittelrohr im Übergangsbereich und/oder im Bereich des Anlageabschnitt (64) ein nach radial innen zurückversetztes, sich in Richtung des Gehäusedeckels (14) erstreckendes, umfangmäßig geschlossenes Staurohr (54) umfasst.

14. Ölfilteranordnung (10, 200, 300, 400) nach Anspruch 13, **dadurch gekennzeichnet, dass** der Durchmesser des Staurohrs (54) wenigstens weitgehend dem Durchmesser der Mittelrohrverlängerung (34) entspricht.

15. Mittelrohr (20) umfassend eine Mittelrohrverlängerung (34) für eine Ölfilteranordnung (10, 200, 300, 400) nach einem der vorhergehenden Ansprüche, wobei die Mittelrohrverlängerung (3) ein Drainagefenster (44), ein Reinölfenster (42) und ein Restablauffenster (46) derart aufweist,
- dass in einer in der Ölfilteranordnung angeordneten Betriebslage des Mittelrohrs (20) das Reinölfenster (42) mit einer Reinölöffnung (33) eines Ablaufraums (36) eines zur Aufnahme eines Filterelements (18) vorgesehenen Aufnahmeraums (16) der Ölfilteranordnung korrespondiert und das Restablauffenster (46) sowie das Drainagefenster (44) verschlossen ist, und
- dass in einer in der Ölfilteranordnung angeordneten Ablasslage des Mittelrohrs (20) das Reinölfenster (42) verschlossen ist, wobei das Drainagefenster (44) mit einer Drainageöffnung (40) des Ablaufraums (36) und das Restablauffenster (46) mit einem Zugang zur Bodenseite (52) des Aufnahmeraums (16) so korrespondiert, dass Restöl aus dem Aufnahmeraum (16) über das Restablauffenster (46) durch die Mittelrohrverlängerung zur Drainageöffnung (40) abfließen kann.

## Claims

1. Oil filter arrangement (10, 200, 300, 400) having a pot-shaped receptacle chamber (16) for a filter element (18) through which oil can flow in radial manner, said receptacle chamber being closable with a housing cover (14), and having a central tube (20) through which flow can take place radially at least in sections for holding the filter element (18) in the receptacle chamber (16), wherein on the base side (52) of the receptacle chamber (16) opposing the housing cover (14) is arranged a run-off chamber (36), which has a radially arranged clean oil opening (38) and a radially arranged drainage opening (40), and wherein a central tube extension (34) comprising a clean oil window (42), a drainage window (44) and a residue run-off window (46) engages in the run-off chamber (36) such that,
- in an operating position of the central tube (20), the clean oil opening (38) corresponds with the clean oil window (42), the drainage opening (40) corresponds with the one closed section (48) of the central tube extension (34) and a closed section (50) of the wall of the run-off chamber (36) corresponds with the residue run-off window (46) and
- in a draining position of the central tube the clean oil opening (38) corresponds with a closed section of the central tube extension (34), the drainage opening (40) corresponds with the drainage window (44) and the residue run-off window (46) corresponds with an access to the base side (52) of the receptacle chamber (16) such that residual oil is able to flow out of the receptacle chamber (16) via the residue run-off window (46) through the central tube extension (34) to the drainage opening (40).

2. Oil filter arrangement (10, 200, 300, 400) according to claim 1, **characterised in that** the entrance from the base side (52) to the residue run-off window (46) is realised by direct correspondence of the residue run-off window (46) with the base side (52), by means of a gap (70) extending from the base side (52) to the residue run-off window (46) running along the central tube extension (34) and/or by means of a channel running from the base side (52) to the residue run-off window (46).

3. Oil filter arrangement (10, 200, 300, 400) according to claim 1 or 2, **characterised in that** the central tube extension (34) is formed in one piece with the central tube (20).

4. Oil filter arrangement (10, 200, 300, 400) according to one of the preceding claims, **characterised in that** the free end side of the central tube extension (34) is open and that the drainage window (44) of the central tube extension (34) is formed by the open end side of the central tube extension.

5. Oil filter arrangement (10, 200, 300, 400) according to one of the preceding claims, **characterised in that**, with the housing cover (14) open, the central tube can be transferred by axial displacement from the operating position into the draining position.

6. Oil filter arrangement (10, 200, 300, 400) according to one of the preceding claims, **characterised in that** mutually corresponding engagement means (60) are provided at the central tube extension (34) and at the run-off chamber (36) in order to avoid twisting the central tube.

7. Oil filter arrangement (10, 200, 300, 400) according to one of the preceding claims, **characterised in that** on the radial periphery of the central tube extension (34) at the height of the drainage window (44), the clean oil window (42) and/or the residue run-off window (46), further corresponding windows are provided.

8. Oil filter arrangement (200, 300, 400) according to one of the preceding claims, **characterised in that** spring means (68) supported on the housing (12) are provided, said spring means transferring the central tube from the operating position into the draining position on opening the housing cover (14).

9. Oil filter arrangement (10, 200, 300, 400) according to one of the preceding claims, **characterised in that** restraining means (74) are provided at the central tube (20, 34) which make a transfer of the central tube beyond the draining position difficult.

10. Oil filter arrangement (10, 200, 300, 400) according to claim 9, **characterised in that** the restraining means (74) are designed as hook sections provided at the free end of the central tube extension (34) for hooking in at an edge (76) of an opening (38, 40) on the central tube extension (34).

11. Oil filter arrangement (10, 200, 300, 400) according to one of the preceding claims, **characterised in that** provided on the central tube are sealing rings (62) which separate individual sections of the central tube, in particular the section having the clean oil window, the section having the residue run-off window, the section closing the drainage opening in the operating position and the section closing the clean oil opening in the draining position.

12. Oil filter arrangement (10, 200, 300, 400) according to one of the preceding claims, **characterised in that** in the transition region to the central tube extension, the central tube has a radially outwardly extending contact section (64) for the end side (24) of the filter element (18) facing away from the housing cover (14) .

13. Oil filter arrangement (10, 200, 300, 400) according to claim 12, **characterised in that**, in the transition region and/or in the region of the contact section (64), the central tube has a peripherally closed pressure tube (54) which is set back radially inwardly and extends in the direction of the housing cover (14).

14. Oil filter arrangement (10, 200, 300, 400) according to claim 13, **characterised in that** the diameter of the pressure tube (54) at least largely corresponds to the diameter of the central tube extension (34).

15. Central tube (20) comprising a central tube extension (34) for an oil filter arrangement (10, 200, 300, 400) according to one of the preceding claims, wherein the central tube extension (34) has a drainage window (44), a clean oil window (42) and a residue run-off window (46) such that,
- in an operating position of the central tube (20) arranged in the oil filter arrangement, the clean oil window (42) corresponds with a clean oil opening (38) of a run-off chamber (36) of a receptacle chamber (16) of the oil filter arrangement for accommodating a filter element (18) and the residue run-off window (46) and the drainage window (44) is closed, and,
- in a drainage position of the central tube (20) arranged in the oil filter arrangement, the clean oil window (42) is closed, wherein the drainage window (44) corresponds with a drainage opening (40) of the run-off chamber (36) and the residue run-off window (46) corresponds with an accessway to the base side (52) of the receptacle chamber (16) such that residual oil can flow out of the receptacle chamber (16) via the residue run-off window (46) through the central tube extension to the drainage opening (40).

## Revendications

1. Système de filtre à huile (10, 200, 300, 400) comportant un logement (16) en forme de godet, apte à être fermé par un couvercle (14) et destiné à recevoir un élément filtrant (18) propre à être traversé dans le sens radial par l'huile, et comportant un tube central (20) pouvant être traversé au moins par zones dans le sens radial et destiné à retenir l'élément filtrant (18) dans le logement (16), dans lequel système un espace d'évacuation (36), qui comporte un orifice pour huile filtrée (42) agencé radialement et un orifice de drainage (40) agencé radialement, est disposé sur le fond (52) du logement (16), opposé au couvercle (14), et dans lequel système un prolongement (34) du tube central, qui comporte une fenêtre pour huile filtrée (42), une fenêtre de drainage (44) et une fenêtre d'évacuation des résidus (46), s'engage dans l'espace d'évacuation (36) de telle sorte
- que, dans une position de service du tube central (20), l'orifice pour huile filtrée (38) correspond avec la fenêtre pour huile filtrée (42), l'orifice de drainage (40) correspond avec un tronçon fermé du prolongement (34) du tube central et un tronçon fermé (50) de la paroi de l'espace d'évacuation (36) correspond avec la fenêtre d'évacuation des résidus (46), et
- que, dans une position de vidange du tube central, l'orifice pour huile filtrée (38) correspond avec un tronçon fermé du prolongement (34) du tube central, l'orifice de drainage (40) correspond avec la fenêtre de drainage (44) et la fenêtre d'évacuation des résidus (46) correspond avec une entrée vers le fond (52) du logement (16), de telle sorte que les résidus d'huile peuvent s'écouler hors du logement (16) par l'intermédiaire de la fenêtre d'évacuation des résidus (46) à travers le prolongement (34) du tube central vers l'orifice de drainage (40).

2. Système de filtre à huile (10, 200, 300, 400) selon la revendication 1, **caractérisé en ce que** l'entrée depuis le fond (52) vers la fenêtre d'évacuation des résidus (46) est réalisée par une correspondance directe de la fenêtre d'évacuation des résidus (46) avec le fond (52), par une fente (70) qui s'étend le long du prolongement (34) du tube central depuis le fond (52) vers la fenêtre d'évacuation des résidus (46) et/ou par un canal qui s'étend depuis le fond (52) vers la fenêtre d'évacuation des résidus (46).

3. Système de filtre à huile (10, 200, 300, 400) selon la revendication 1 ou 2, **caractérisé en ce que** le prolongement (34) du tube central est réalisé d'un seul tenant avec le tube central (20).

4. Système de filtre à huile (10, 200, 300, 400) selon l'une quelconque des revendications précédentes, **caractérisé en ce que** la face frontale libre du prolongement (34) du tube central est ouverte et **en ce que** la fenêtre de drainage (44) du prolongement (34) du tube central est formée par la face frontale ouverte du prolongement du tube central.

5. Système de filtre à huile (10, 200, 300, 400) selon l'une quelconque des revendications précédentes, **caractérisé en ce que**, lorsque le couvercle (14) est ouvert, le tube central peut être amené depuis la position de service dans la position de vidange au moyen d'un mouvement de translation axial.

6. Système de filtre à huile (10, 200, 300, 400) selon l'une quelconque des revendications précédentes, **caractérisé en ce que** des moyens de prise (60), correspondants les uns avec les autres, sont prévus sur le prolongement (34) du tube central et sur l'espace d'évacuation (36) pour éviter une rotation du tube central (20).

7. Système de filtre à huile (10, 200, 300, 400) selon l'une quelconque des revendications précédentes, **caractérisé en ce que**, sur le pourtour radial du prolongement (34) du tube central, d'autres fenêtres appropriées sont prévues à hauteur de la fenêtre de drainage (44), de la fenêtre pour huile filtrée (42) et/ou de la fenêtre d'évacuation des résidus (46).

8. Système de filtre à huile (200, 300, 400) selon l'une quelconque des revendications précédentes, **caractérisé en ce qu'**il est prévu un moyen à ressort (68), qui prend appui sur le boîtier (12) et qui, à l'ouverture du couvercle (14), amène le tube central de la position de service dans la position de vidange.

9. Système de filtre à huile (10, 200, 300, 400) selon l'une quelconque des revendications précédentes, **caractérisé en ce que** des moyens de retenue (74) sont prévus sur le tube central (20, 34), par lesquels le tube central peut difficilement être amené au-delà de la position de vidange.

10. Système de filtre à huile (10, 200, 300, 400) selon la revendication 9, **caractérisé en ce que** les moyens de retenue (74) sont réalisés sous forme de tronçons à crochet, prévus sur l'extrémité libre du prolongement (34) du tube central et destinés à s'accrocher dans un bord (76) d'un orifice (38, 40) sur le prolongement (34) du tube central.

11. Système de filtre à huile (10, 200, 300, 400) selon l'une quelconque des revendications précédentes, **caractérisé en ce que** des bagues d'étanchéité (62) sont prévues sur le tube central, par lesquels les différents tronçons du tube central sont séparés les uns des autres, en particulier le tronçon muni de la fenêtre pour huile filtrée, le tronçon muni de la fenêtre d'évacuation des résidus, le tronçon fermant l'orifice de drainage dans la position de service et le tronçon fermant l'orifice pour huile filtrée dans la position de vidange.

12. Système de filtre à huile (10, 200, 300, 400) selon l'une quelconque des revendications précédentes, **caractérisé en ce que** le tube central, dans la zone de transition vers le prolongement, comporte un tronçon d'appui (64), qui s'étend radialement vers l'extérieur, pour la face d'extrémité (24) de l'élément filtrant (18), détournée du couvercle (14).

13. Système de filtre à huile (10, 200, 300, 400) selon la revendication 12, **caractérisé en ce que** le tube central, dans la zone de transition et/ou dans la zone du tronçon d'appui (64), comporte un tube de retenue (54) fermé sur sa face périphérique, qui est en retrait radialement vers l'intérieur et s'étend vers le couvercle (14).

14. Système de filtre à huile (10, 200, 300, 400) selon la revendication 13, **caractérisé en ce que** le diamètre du tube de retenue (54) correspond au moins en grande partie au diamètre du prolongement (34) du tube central.

15. Tube central (20) comportant un prolongement (34) pour un système de filtre à huile (10, 200, 300, 400) selon l'une quelconque des revendications précédentes, dans lequel le prolongement (34) comporte une fenêtre de drainage (44), une fenêtre pour huile filtrée (42) et une fenêtre d'évacuation des résidus (46), de telle sorte
- que, dans une position de service du tube central (20) agencée dans le système de filtre à huile, la fenêtre pour huile filtrée (42) correspond avec un orifice pour huile filtrée (38) d'un espace d'évacuation (36) d'un logement (16), prévu pour recevoir un élément filtrant (16), du système de filtre à huile et la fenêtre d'évacuation des résidus (46), ainsi que la fenêtre de drainage (44) sont fermées, et
- que, dans une position de vidange du tube central (20) agencée dans le système de filtre à huile, la fenêtre pour huile filtrée (42) est fermée, tandis que la fenêtre de drainage (44) (44) correspond avec un orifice de drainage (40) de l'espace d'évacuation (36) et la fenêtre d'évacuation des résidus (46) correspond avec une entrée vers le fond (52) du logement (16), de telle sorte que des résidus d'huile peuvent s'écouler hors du logement (16) par l'intermédiaire de la fenêtre d'évacuation des résidus (46) à travers le prolongement du tube central vers l'orifice de drainage (40).
